# EUROPEAN PATENT APPLICATION

(11) **EP 3 923 162 A1**
(43) Date of publication of application: **15.12.2021**
(21) Application number: 20020274.5
(22) Date of filing: 10.06.2020
(51) Int. Cl.: G06F 16/487, G06F 16/435, G06F 16/787, G06F 16/9537, G06K 9/00, G06T 19/00, G06F 16/9535

(54) **AUGMENTED REALITY PERSONALIZED GUIDED TOUR METHOD AND SYSTEM**

(71) Applicant: Diadrasis Ladas I & Co Ike, 104 33 Athens (GR)
(72) Inventor: The designation of the inventor has not yet been filed

(57) **Abstract**

A method and system to provide personalized guided tours through a virtual guide in an augmented reality environment. A system based on artificial neural networks, recommends optimized for each user routes consisting of a combinations of points of interest, narrations and augmenter reality presented multimedia content.

## Description

### Technical Field

The present invention relates to the systems and methods that employee recommendation system techniques to provide personalized tours with the help of virtual agent.

### Background

Augmented Reality (AR) effects are computer-generated digital objects like images, 3d models and animation, that are superimposed or integrated into a user's view of a real-world scene, as seen through a mobile device. Certain AR effects may be configured to be placed with objects in the real world. For example, a computer-generated object may be visually placed on a real-world table. The augmented effect may be presented in a variety of ways. For example, the real-world table may be captured by the camera of a mobile smart phone and displayed in real-time through the device's display. In addition to displaying the table, the computing device may also display the virtual object, integrating it with the video of the table that is being displayed. As another example, a user may be viewing the real-world through AR glasses or viewing optics. Like regular glasses, the AR glasses may have one or more lenses that are translucent so that the user may see real-world objects through the lenses. A computer-generated virtual object may be projected onto the lenses so that the virtual object is seen along with any real-world object that is visible through the lenses.

A mobile computing device, such as a smart phone, AR glasses or headset, tablet computer, or laptop computer, may include functionality for determining its location, direction, or orientation, such as a GPS receiver, compass, gyroscope, or accelerometer. Such a device may also include functionality for wireless communication, such as a wireless local area networks (WLANs), a cellular telephone network, a Bluetooth or infrared (IR) communication. Such a device may also include one or more cameras, scanners, touch screens, microphones, or speakers. Mobile computing devices may also execute software applications, such as games, web browsers, or social-networking applications. With social-networking applications, users may connect, communicate, and share information with other users in their social networks.

The goal of a recommendation system is to produce relevant and personalized recommendations for users based on historical data. While there are a plethora of techniques, most fall under either one or a hybrid of collaborative filtering or content-based filtering. Collaborative filtering techniques take advantage of large volumes of user and item consumption data to identify implicit interaction relationships between the user and an item. Content-based filtering focuses on explicit relationships amongst the items and preferences of the user.

When implementing a recommendation system that uses collaborative filtering, there are multiple techniques available for processing the large volumes of user and item consumption data. One such technique, neural network, is a machine-learning algorithm inspired by the neurological structure of the brain. A neural network typically comprises an input layer, one or more hidden layer(s) and an output layer. The nodes in each layer connect to nodes in the subsequent layer and the strengths of these interconnections are typically learnt from data during the training process.

### Problem to be addressed

Recommendation systems are very successful when the prediction is related to relatively simple items, like a movie to be watched or an item to be purchased but are still not very sophisticated when the recommendations concerns more elaborated entities, like a proposed tour to a city or a museum, when many parameters have to be considered (points of interest, type of narration, type of multimedia material to be presented, route optimizations etc). And even if recommendations are successful, they are not presented in an engaging and attractive way for the user.

### Brief Description of the Drawings

Various embodiments in accordance with the present disclosure will be described with reference to the drawings, in which:
Figure 1 depicts an illustrative example of a system or architecture in which the method for providing object recognition may be implemented;
Figure 2 some example data flow that may be implemented using the described architecture in accordance with at least some embodiments;
Figure 3 depicts an example of recommendation system that could be incorporated in various embodiments of the method.
Figure 4 depicts an example of neural network that could be incorporated in various embodiments of the method.
Figure 5 and 6 depict some example data flow concerning the manage of the augmented reality content that may be implemented using the described architecture in accordance with at least some embodiments;
Figure 7 depict a computing system that could be used to implement the discussed method.

### Description

Embodiments described herein relate to an AR feature where a virtual guide is presented to a user while he is engaged in a touring activity, as for example sightseeing a city or visiting a museum. The virtual guide makes proposals according to the recommendations of a system that is based on an artificial neural network. The recommendation system is capable to estimate and process information from different aspects and levels of the user behavior in order to propose a personalized route that comprises a sequence of visiting points, the story line or narration to be followed, and the kind of multimedia material to be presented in a Augmented Reality Environment.

In particular embodiments, the user's locations may be tracked and used for positioning the virtual guide or other virtual reference object for display on a user's AR device. That virtual guide and objects, may be presented to the user as an AR effect that is integrated with real-world scenes.

The main challenges to be addressed while presenting the virtual guide and objects are the followings:
One challenge relates to how to present the virtual objects so that the visual cues associated with the virtual reference object can accurately reflect and convey the relative position and/or orientation between the user and the reference object. In particular embodiments, a computing system may track the current user's location with respect to a start time and display a virtual reference object in the user's field of view based on the relative position between the user and the reference object at corresponding moments in time

The appearance of the virtual object can be adjusted based on the determined depth (e.g., the object may appear larger if it is closer to the user and smaller if it is farther). Where the virtual object is positioned within the field of view of the user can be determined in accordance with at least the depth and/or orientation of the virtual object, as well as contour of the surrounding real-world.

In addition to scale, proper placement of the virtual guide on the two-dimensional display of the AR device also influences depth perception. Particular embodiments may estimate the depth of real-world objects and integrate the virtual guide into the scene so that it is placed with real-world objects that are similarly far from the user. By processing images of the user's surrounding, the AR application may identify objects in the user's view, detect the position, topology, and depth (e.g., distance) of the objects, and place or track the virtual gudie in the scene accordingly. In particular embodiments, the AR application may determine the 3-dimensional layout of the surrounding using various techniques, such as stereo vision image processing techniques using cameras of the AR device. For example, the inside-out facing cameras (analogous to human eyes) of the AR glasses may capture images of the surrounding environment and those images may be used to compute depth information of objects in the environment using triangulation techniques. Any other object detection technologies and/or depth perception technologies may additionally or alternatively be used.

In particular embodiments, the appropriate AR effect may be created with realistic visual cues in the field of view of the user as it is integrated with the real-world scene. For example, the virtual gudie appear larger when it is closer to the user and smaller when it is farther away

As another example of providing the appropriate visual cues, the virtual guides's position within the field of view of the user may be placed according to where the road appears. For instance, if the virtual companion's position in the field of view of the user is approximately centered when the user is walking on leveled ground, the virtual guide may appear higher when the user walks on an upward-sloping road.

In particular embodiments, object-recognition and depth-sensing technology may be used to identify objects in the real-world scene (e.g., roads, buildings, etc.) so that the virtual guide may be integrated with the scene more realistically.. Based on the relative distance between the virtual guide and the user, the system may identify, using object-recognition (e.g., a machine-learning modeled trained to recognize road) and/or depth-sensing technology (e.g., Simultaneous Localization and Mapping or SLAM algorithm), a road segment that is at the desired distance from the user. Based on this determination, the system may have the virtual guide appear on top of that road segment. In particular embodiments, object-recognition and depth-sensing technology may be used to generate a contour map of the terrain within the user's field of view. For example, object-recognition technology may be used to identify roads, and depth-sensing technology may be used to determine how far points along the road or road segments are from the user.

In particular embodiments, the AR application may determine the relative orientation between the user's field of view and the position of the virtual guide to determine whether the virtual companion is visible to the user. For example, the field of view of the user may be based on the orientation of the user's AR device, which can be detected using motion sensors, such as a gyroscope or an inertial measurement unit. Based on the relative position between the user and the virtual companion, the system may determine whether the virtual companion is within the user's field of view and selectively display the virtual guide.

In particular embodiments, the AR application may be built on AR software development platforms, such as ARKIT or ARCORE, to enable scene tracking and display virtual objects in the user's view. The AR software development platform can enable the AR application to track the user's real-world surroundings and sense the user AR device or mobile device's orientation and position relative to the environment in the user's view by taking advantage of user mobile device's built-in hardware of cameras and sensors, including motion sensors and camera sensors. The AR application can place 2D or 3D virtual objects in the user's real-world scene, wherein the orientation, dimensions, or position of the virtual objects can be adjusted based on the user's real-world scene.

In particular embodiments, the captured images can be processed to recognize landmarks (e.g., structures, buildings, curbs, street signs, and other fixed or permanent objects) in the real-world, and the landmarks can be integrated in the persistent AR world map. The landmarks can be used to identify the user's relative position with respect to the environment more precisely. For example, instead of identifying the user's relative position is 100 feet with respect to the entrance of a park, the user's relative position can be identified as 3 feet with respect to a nearby statue in the park. Thus, the user's location can be tracked more precisely. In addition to the GPS information, using visual information (e.g., images), the persistent AR world map may be used to track and record relative locations with respect to the user's environment more precisely. For another example, GPS may indicate that the user is at an intersection. By combining with the visual information captured by the user's camera, the user may be oriented within the persistent AR world map (e.g., the user may be at the intersection (location) facing a clock tower at the corner (orientation) and is 5 feet away from the clock tower (relative position)). As shown in the examples, it may be more precise to track a user's location by using visual information positioning. Therefore, the system can track and record the user's loca-tions in the first movement session more precisely, and user's past location can be retrieved more accurately from the persistent AR world map.

In particular embodiments, when the GPS is not available, using visual information can track the user's relative location with respect to the environment and build a 3D AR map of the specific environment. By integrating a plurality of the 3D AR maps of respective environments, it is possible to build a larger scale comprehensive AR world map. The system can use the AR world map to accurately track user's locations, and the virtual guide can be created accordingly and be displayed in the field of the user's view.

### Detailed Description

In the following description, various embodiments will be described. For purposes of explanation, specific configurations and details are set forth in order to provide a thorough understanding of the embodiments. However, it will also be apparent that the embodiments may be practiced without the specific details. Furthermore, well-known features may be omitted or simplified in order not to obscure the general idea.

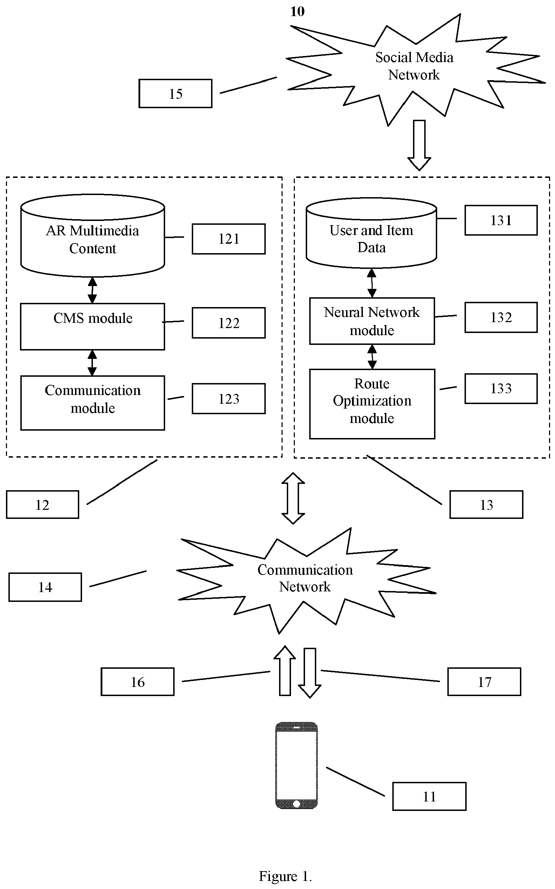

A system that could embody the previous mention scenario is shown in Figure 1, comprising three main subsystems.
The mobile device 11 of the user where the AR content and the multimedia information is presented
The computing system 12 that manages the AR content and the multimedia information
The recommendation system 13, that makes the personalized suggestions for the user and is also receives data from various social media networks 15.

The subsystems communicate through a communication network 14.

In more detail, the mobile device 11 is posting the information 16 concerning its position and rotation, as registered from the various mobile device sensors through the communication network 14 to the computing system 34.

The information is received from the communication module 123 and transferred to the CMS module 122 that manages the information and the multimedia content. The information of the virtual objects as well as the multimedia material concerning the real word objects are managed through the storage device module 121..

The content management module 122 can be a combination of hardware and software configured to carry out aspects of the present invention. In some embodiments, the content management system 122can include a computing system with specialized software and databases designed for providing a method for creating, transforming, storing, and/or delivering AR content or a combination thereof. For example, the content management system 122 can be software installed on a cloud based computing device including a web based interface which is accessible by computing devices . As would be appreciated by one skilled in the art, the cloud content management system 122 can include a single computing device, a collection of computing devices in a network computing system, a cloud computing infrastructure, or a combination thereof.

In some embodiments, the cloud content management system 122 can include a storage device 121. The storage device 121 can include any combination of computing devices configured to store and organize a collection of data. For example, storage device 121 can be a local storage device on the content management system 122, a remote database facility, or a cloud computing storage environment. The storage device 121 can also include a database management system utilizing one or more database models configured to interact with a user for accessing and modifying AR content.

Continuing with Figure 1, the computing system can include a combination of core components to carry out the various functions of the present invention. In some embodiments, the content management system 122 can include, at least, a user interface (UI) module a transformation module and a delivery module to provide the functionality of the present invention. As would be appreciated by one skilled in the art, the modules 121, 122, 123 can include any combination of hardware and software configured to carry out the various aspects of the present invention. In particular, each of the modules is configured to provide users with a system to create, store, and receive portable AR content.

In accordance with an example embodiment of the present invention, the CMS module 122 is configured to provide a mechanism for content providers to create and customize AR content to be displayed to content consumers. In some embodiments, the CMS module 122 can be configured to provide a web portal interface for content providers to login to the to upload and customize their AR content. The CMS module 122 can provide any combination of interfaces to access to the system 34. For example, the CMS module 122 can provide a webpage, an application program interface (API), a mobile application interface, or any combination thereof.

In some embodiments, the CMS module 122 can be configured to receive and store a combination of content and data from content provider device . For example, the CMS module 122 can be configured to receive uploaded AR content source files (e.g., 2D AR content, 3 AR content, or other multimedia) and data to be associated with those files. The AR content source files can be received using any combination of formats known in the art. For example, the AR content can be 3D AR content received in a .fbx, .dae, .3ds, .dxf, .obj, .skp, .usdz, etc. file format. In some embodiments, depending on the AR content source, additional files to be associated with the AR content can be uploaded to the system 34 and stored in association with the AR content. For example, if textures are not embedded within the uploaded AR source content, because the AR files reference external texture files, object textures can be uploaded for use with the AR content. In another example, some file formats can support textures that are embedded within that file, such that the textures are referenced within the file itself. The present invention can be modified to accept all combinations of file formats known in the art.

In some embodiments, data to be associated with the AR content can be received by the CMS module 122 through any combination of methods known in the art. For example, data or metadata can be received from user Tillable input controls within a graphical interface provided by the UI module 110, the input controls including but not limited to, checkboxes, radio buttons, dropdown lists, list boxes, buttons, toggles, text fields, date field. Once input data is received, In some embodiments, data to be associated with the AR content can be received by the CMS module 122 through any combination of methods known in the art. For example, data or metadata can be received from user input controls within a graphical interface provided by the CMS module 122, the input controls including but not limited to, checkboxes, radio buttons, dropdown lists, list boxes, buttons, toggles, text fields, date field. Once input data is received, the CMS module 122 can associate the data with the uploaded AR source content can associate the data with the uploaded AR source content. The input data can be used by the system 34 to determine how the AR content should be formatted and/or displayed. For example, the input data can specify how the content is to be triggered (e.g., response to a marker, geolocation, etc.) to be displayed, when it can be displayed (e.g., specified time period, geolocation, etc.), where it can be displayed (e.g., geolocation, area size, etc.), what devices can display the content (e.g., smartphone, headsets, etc.) and any other combination of rules that the user can specify (e.g., specific users at predetermined points in time at specific locations). In some embodiments, the data can specify parameters for how the AR content itself is displayed. For example, the data can specify an orientation, position, size, etc. of the AR content. Overall, the CMS module 122 can be configured to receive any data receivable from content providers and stored within the database structure of the storage device 121.

As a result, the CMS module 122 can transform AR content that is only viewable by a source application to a format that can be downloaded rendered across any platform running one of the variants at runtime. In other words, the transformed AR content becomes portable content that is formatted in a state that is efficiently renderable by any requesting device because the transformed AR content is provided in a format that is native and optimized for the requesting client rendering technology (e.g., iOS, Android, Windows, etc. Operating Systems). For example, if a device is operating iOS, the device will receive AR content that is formatted for rending and displaying within iOS such that once downloaded, the device merely needs to render and display the AR content without any additional formatting.

As would be appreciated by one skilled in the art, the communications network 14 can include any combination of known networks. For example, the communications network 14 may be combination of a mobile network, WAN, LAN, or other type of network. The communications module 123 can be used to exchange data between the computing devices 12 , exchange data with the storage device 121, and/or to collect data from additional sources.

In some embodiments, the communication module 123 can analyze requests to determine whether and/or what AR content should be delivered based on information received from the requesting device. AR content can be configured for display at certain locations or in response to capturing a particular, visual, audio, geolocation, or motion based cue and the communication module can determine whether those criteria have been satisfied prior to delivery. For example, communication module 123 can analyze a geolocation of the requesting device or an image received from a content consumer device 31 to determine whether there is a marker or recognizable surface present in the image that will trigger any AR content, based on the data or metadata associated with AR content in the storage device 121. In response to a valid request (e.g., criteria for some AR content is met), the communication module 123 can be configured to identify the operating system of the requesting device (e.g., via metadata transmitted by the requesting device) and transmit the appropriate AR package to the device for display.

The Recommendation System 13 comprises the User and Item Data 131 storage device, where information for the users, the users behavior, the item consumption and the various types of items (points of interest, narrations, geographical information for the routes etc) are managed. The recommendation system, in some embodiments, could also get and evaluate data for the users and items consumptions from various social media networks.

The neural network 132 consumes the inputs of the User and Item Data 131 and produces outputs in the form of specific suggestions for the point of interest and the multimedia information that should be presented to the user.

The route optimization module processes the neural network 132 recommendations and optimize the route of the user, according to the geographical data, in other words the succession of the points of interest to be visited.

According to the suggestions of the Recommendation System 13 the multimedia material is served from the Computing System 12 to the mobile device 11. Data from the interaction of the user with the multimedia content, as for example how many time did he or she spent accessing it, an indication of interesting the content was for the user, are transformed back to the recommendation system.

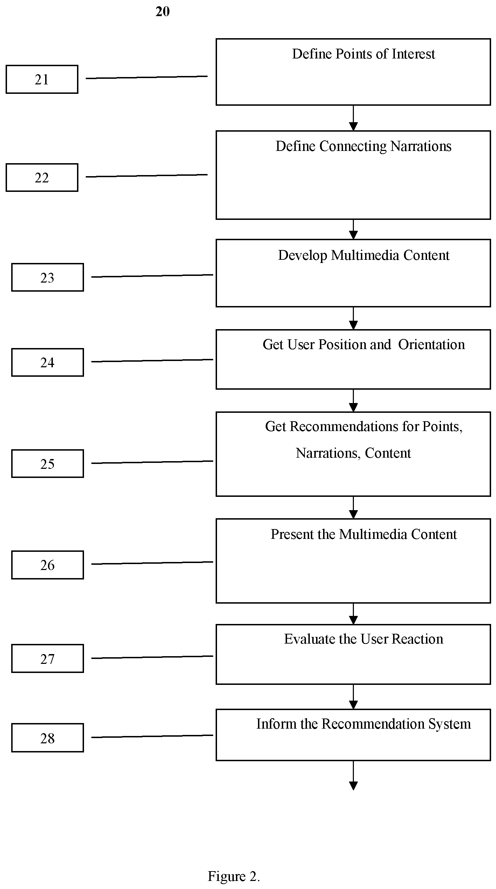

Figure 2 presents the process and information flow in the system described in Figure 1. In some particular embodiments, the system and method could be used to optimize a city or a museum tour. In step 21 a set of points of interest with the relevant geographical information, their position and connecting routes are defined.

In step 22 a set of narrations, connecting at least some of the previous points of interest are defined. Different narrations could refer to different areas of interest, as for example thematic tours focusing on history, food or markets for a city tour, or different historic periods for a museum visit.

In step 23 multimedia material for the points of interest, in various forms (text, images, animation, 3d models etc) is developed and feeds the storage device 121 of the Computing System 12.

In step 24 the mobile device posts to the Recommendations System 13 the information concerning the present point and moving direction of the user. The recommendation system processing the information for the user and his or her history of items (points of interest, narrations, content) consumption recommends a set of proposals for the next point of interest to be visited or multimedia information to be presented.

In case the suggestion is for a next point of interest, the virtual guide is presented in an AR environment to guide the user, according to the suggested optimized route. In case the suggestion is for a multimedia item to be presented to the user, the Computing System 12 passes the content to the device 11 and the content is presented to the user.

Information concerning the item consumption, in other words the interaction of the user with the point of interest in general or the specific content, as for example how many time spent to visit, to hear a narration, or watch a video or read a text, indication of how interested or satisfied had been is transferred from the mobile device 11 back to the Recommendation System 13.

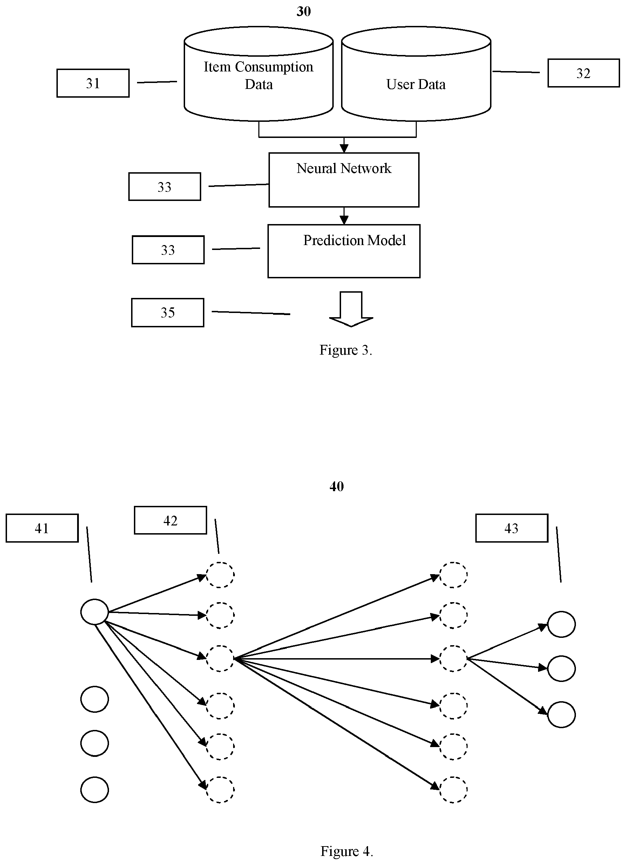

Figure 3 depicts an illustrative example of a recommendation system that may be implemented in accordance with at least some embodiments. A recommendation system 30 may include computer executable instructions that that implement one or more machine learning techniques to create a prediction model 35 that may be used to predict item consumption events 35 based on item consumption data 31 and user data 32 .

A machine learning technique may use any suitable algorithm or set of algorithms that, when executed, generate a prediction model from provided data. For example, a machine learning technique may generate a prediction model based on identified data patterns within the provided data. A prediction model may use any suitable system capable of receiving input and providing a prediction. For example, a prediction model may include a function or algorithm.

An item in the specific already discussed embodiments of a city or museum tour, may be a point of interest or a multimedia item, but in general any suitable good or service. In some embodiments, an item consumption event may include an identifier for the item, a date of the consumption or any other suitable information. Item consumption data may include item consumption events associated with a plurality of users.

In some embodiments, the consumption event prediction may be also be generated based on item features and/or user features. For example, when generating a consumption event prediction 35, a recommendation system 30 may take into account features related to an item. In another example, a user's demographic data may be taken into account when generating a consumption event prediction 35 specific to that user, such as the user's age, income level, level of education, or any other suitable demographic details. Likewise, item features and/or user features may be taken into account when generating a prediction model 33.

Figure 4 illustrates an example artificial neural network 40 in accordance with at least some embodiments. A recommendation system may implement embodiments of the neural network 40 as a prediction model to provide item consumption event predictions.

Generally, an artificial neural network 40 represents a network of interconnected nodes, where knowledge about the nodes is shared across output nodes and knowledge specific to each output is retained. Each node represents a piece of information. Knowledge can be exchanged through node-to-node interconnections and node-to-task connections. Input to the artificial neural network 40 activates a set of nodes. In turn, this set of node activates other nodes, thereby propagating knowledge about the input. At each set of nodes, transformative functions may be applied to the data. This activation process is repeated across other nodes until an output node is selected and activated.

As illustrated, the artificial neural network 40 includes a series of layers, each representing a set of nodes. On one side of the series of layers exists an input layer 41. The input layer 41 includes a set of nodes that are referred to herein as input nodes. Each of these input nodes may be mapped to a particular item consumption event.

On the other side of the series of layers is an output layer 43. The output layer 43 includes a number of output nodes. Each of the output nodes is mapped to another item consumption event. In some embodiments, a value associated with the output node may be weighted according to an amount of time that has elapsed since the occurrence of the of output values may include item consumption events after item

One or more hidden layers 42 separates the input layer 41 and the output layer 43. The hidden layers 42 include an arbitrary number of hidden layers. In turn, each of the hidden layers also includes a set of nodes that are referred to herein as hidden nodes.

On one side of the hidden layers 42, hidden nodes are interconnected to the input nodes. Each of the input nodes so may be connected to each of the hidden nodes of the hidden layer connected to the input layer 41. On the other side of the hidden layer 42, hidden nodes are connected to the output nodes. Each of the output nodes may be connected to each of the hidden nodes of the hidden layer. In other words, each input node connects to each hidden node in the hidden layer closest to the input layer 41 and each output node connects to each hidden node in the hidden layer closest to the output layer 43. If multiple hidden layers exist, the input nodes are interconnected to hidden nodes of the closest hidden layer only. In turn, these hidden nodes are interconnected to the hidden nodes of the next hidden layer and so on and so forth.

An interconnection may represent a piece of information it may learned about the two interconnected nodes. In comparison a connection between a hidden node and an output node may represent a piece of information learned that is specific to the output node. The interconnection may be assigned a numeric weight that can be tuned (e.g., based on a training dataset), rendering the artificial neural network 40 adaptive to inputs and capable of learning.

In the depicted artificial neural network 40, a prediction model may be generated such that the hidden layer 42 retains information (e.g., specific variable values and/or transformative functions) for a set of input values and output values used to train the artificial neural network 40. This retained information may be applied to a set of user-specific input values in order to determine likely output values. In some embodiments, the artificial neural network 40 may be trained on item consumption events for a large number of users so that it may be used to predict future item consumption events for a single user. For example, an artificial neural network 40 may be used to generate a prediction model using inputs that include item consumption events from a plurality of users that occurred before a specified date and outputs that include item consumption events from the plurality of users n this example, the resulting prediction model may be applied to a user's past item consumption events to predict the user's likely future item consumption events. In another example, an artificial neural network 40 may be used to consumption events from a first category of item and outputs that include item consumption events from a second category of item. In this example, the resulting prediction model may be applied to a user's item consumption events in the first category of items to determine the user's likely interests in the second category of items. By way of illustration, the prediction model may be trained using item consumption events related to books as input values and item consumption events related to movies as output values. In this illustration, a user's movie preferences may be ascertained by applying the prediction model to the user's book consumption.

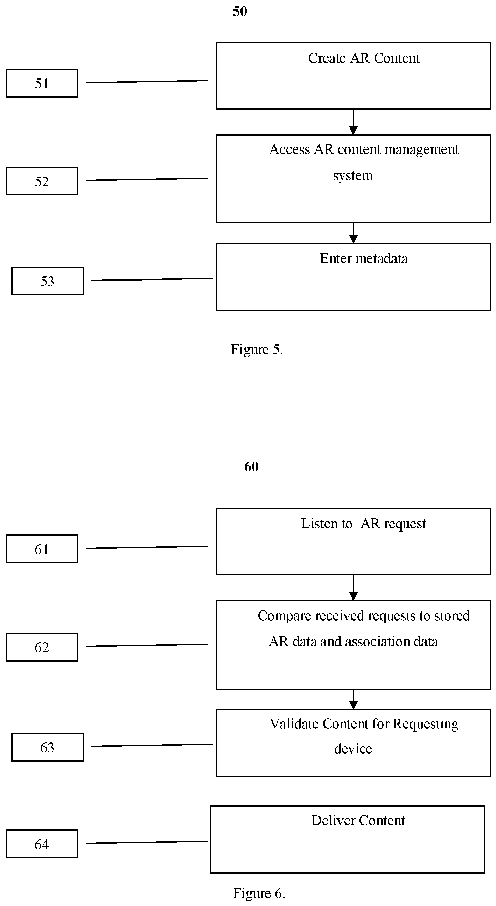

Figure 5 show exemplary flow charts for implementing the system 50 of the present invention. At step 51 a content creator can create AR content that is designed to be provided to content consumers. The AR content can include any combination of two-dimensional (2D) or three-dimensional (3D) AR content and can be created using any combination of software known in the art. The AR content can be saved utilizing the proprietary format utilized by the software utilized to create said AR content, the proprietary format being the format that the utilized software saves the created AR content. As would be appreciated by one skilled in the art, the present invention can be utilized with any combination of multimedia and is not limited to use with AR content. For example, the present invention can be used with all types of augmented reality, such as virtual reality, and other audio and visual mediums.

At step 52 the content creator can access the AR content management module 122 associated with the present invention. The content creator can access the system 122 through any combination of methods or systems known in the art. For example, the content creator can access the system 122 by logging into a webpage, through a web portal, through a desktop or mobile application, using an API, or a combination thereof.

At step 53, once accessing the system 12, the content creator can upload the created AR content, in its proprietary format, to the content management system 122 through any means known in the art. When applicable, the content creator can also upload other files to be associated with the AR content. For example, the content creator can upload textures to be applied to the AR content. Previously to or after uploading the AR content, the content creator can add additional information, parameters, etc. to be associated with the uploaded AR content. For example, the content creator can add information related to how, when, where the AR content is to be displayed. Once all information has been entered and all files have been uploaded, the content creator can save the inputs and the AR content will be managed by the system 22.

Figure 6, depicts an exemplary process 60 showing an example operation of the present invention from the perspective of a content consumer device 31, as discussed with respect to Figures. 1 and 2. In particular, figure 6 shows an example operation for the content consumer device 11 requesting and receiving AR content for rendering and display to a user. In some embodiments, the content consumer device 11 can include a rendering application associated with the system 12 of the present invention or a third-party application configured to receive AR content from the system 12. The application on the content consumer device 11 can be configured to handle the operations provided in process 60. In some embodiments, the system 12 can deny the content consumer device 11 permission from displaying AR content. For example, the application can reference the metadata associated with AR content and can determine whether the displaying device is in the right GPS position (as defined in the metadata), whether other content should be activated near other content with other content (e.g., competitors), etc.

At step 62 the content consumer device 11 can capture location data and/or an image or video of a real-world environment. For example, the content consumer device 11 can us a combination of a global positioning system, a camera, and any other combination of data capturing means to capture information about the real-world environment at the user's current location.

At step 63 the content consumer device 11 can receive a response back from the system 12 including AR content associated with the provided real-world information. The received AR content can already be formatted for rendering and display in a format native to the content consumer device 11 such that it can be displayed on the fly without having to recompile or redeploy the application displaying the AR content on the content consumer device 11. In instances where the system 12 determines that there is no AR content associated with the received request (e.g., the request failed validation), or that the display of the AR content is not appropriate at that time, the response can include an indication that there is no AR content available for the provided real-world information.

At step 64 the content consumer device 11 can render and display the AR content to the user, based on how the AR package(s) is being activated. For example, for location-based AR, the system can use world mapping capabilities to anchor the AR object to a horizontal surface so a user can move around the object in 3D space and it feels there.

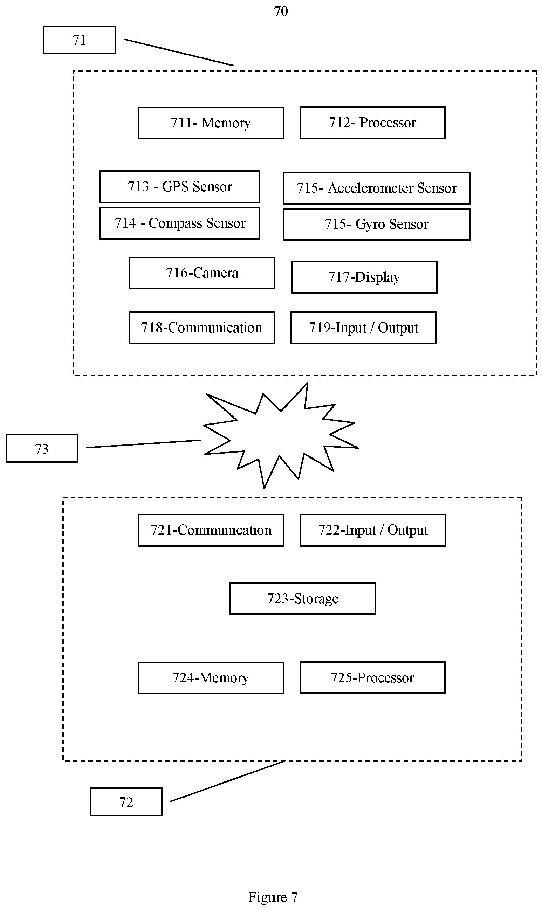

Figure 7 is a block diagram illustrating a system that may be used to run, implement and/or execute any of the methods and techniques shown and described herein in accordance with some embodiments of the present invention. The system includes user devices 71 a communicating system 73 and a computing system 72.

The user device 71 may be any portable user devices such as a Smartphone, a tablet computer, mobile computer or device, pad-like device, a head-mounted display, and/or a wearable device. The user device 71 may include a processor 712, a memory 711 , a camera 716, a display 717, one or more other input/output devices 719 and a Communication device 718.

It also include any combination of position and rotation sensors, like GPS 713, Accelerometer 715, Gyroscope 715 and Compass 714.

The processor 712 is configured to execute computer readable instructions stored in the memory 711 to facilitate one of more steps of the methods described with reference to figures 1 to 6. The memory 711 may include RAM and/or a hard drive memory device. The communication interface 318 is configured to transmit and receive data to and from the mobile device 71 through the network 73. The camera 716 may be any image capture device. The display 717 may be a liquid crystal display (LCD), a light-emitting diode (LED) display, an organic light emitting diode (OLED) display, a liquidcrystal on silicon (LCoS) display, a LED illuminated display, and the like. In some embodiments, the display 717 is a touch display that is configured to receive input from the user. In some embodiments, the display 717 is a head-mounted display that projects images to a lens or into the wear's eyes. The display may be used to display variously user interfaces described with reference to figures 1 to 6 above.. The user device 71 may further include other input/output devices 719 such as a microphone, a speaker, a tilt sensor, a compass, a USB port, a secondary camera, a graphic processor, etc. The input/output devices 719 may be used to enter and playback content items. In some embodiments, the tilt sensor and the compass are used by the system to better position the computer generated graphics over the image of the real-world scene, in addition image recognition.

The computer system 72, in particular embodiments, can perform one or more steps of one or more methods described or illustrated herein. In particular embodiments, one or more computer systems 72 provide functionality described or illustrated herein. In particular embodiments, software running on one or more computer systems 72 performs one or more steps of one or more methods described or illustrated herein or provides functionality described or illustrated herein. Particular embodiments include one or more portions of one or more computer systems 72. Herein, reference to a computer system may encompass a computing device, and vice versa, where appropriate. Moreover, reference to a computer system may encompass one or more computer systems, where appropriate.

This disclosure contemplates any suitable number of computer systems 72. This disclosure contemplates computer system 72 taking any suitable physical form. As example and not by way of limitation, computer system 72 may be an embedded computer system, a system-on-chip (SOC), a single-board computer system (SBC) (such as, for example, a computer-on-module (COM) or system-onmodule (SOM)), a desktop computer system, a laptop or notebook computer system, an interactive kiosk, a mainframe, a mesh of computer systems, a mobile telephone, a personal digital assistant (PDA), a server, a tablet computer system, an augmented/virtual reality device, or a combination of two or more of these. Where appropriate, computer system 72 may include one or more computer systems 72; be unitary or distributed; span multiple locations; span multiple machines; span multiple data centers; or reside in a cloud, which may include one or more cloud components in one or more networks. Where appropriate, one or more computer systems 72 may perform without substantial spatial or temporal limitation one or more steps of one or more methods described or illustrated herein. As an example and not by way of limitation, one or more computer systems 72 may perform in real time or in batch mode one or more steps of one or more methods described or illustrated herein. One or more computer systems 72 may perform at different times or at different locations one or more steps of one or more methods described or illustrated herein, where appropriate.

In particular embodiments, computer system 72 includes a processor 725, memory 724, storage 723, an input/output (I/O) interface 722, a communication 721. Although this disclosure describes and illustrates a particular computer system having a particular number of particular components in a particular arrangement, this disclosure contemplates any suitable computer system having any suitable number of any suitable components in any suitable arrangement.

In particular embodiments, processor 725 includes hardware for executing instructions, such as those making up a computer program. As an example and not by way of limitation, to execute instructions, processor 725 may retrieve (or fetch) the instructions from an internal register, an internal cache, memory 724, or storage 723; decode and execute them; and then write one or more results to an internal register, an internal cache, memory 724, or storage 723. In particular embodiments, processor 725 may include one or more internal caches for data, instructions, or addresses. This disclosure contemplates processor 725 including any suitable number of any suitable internal caches, where appropriate. As an example and not by way of limitation, processor 725 may include one or more instruction caches, one or more data caches, and one or more translation lookaside buffers (TLBs). Instructions in the instruction caches may be copies of instructions in memory 724 or storage 723, and the instruction caches may speed up retrieval of those instructions by processor 725. Data in the data caches may be copies of data in memory 724 or storage 723 for instructions executing at processor 725 to operate on; the results of previous instructions executed at processor 725 for access by subsequent instructions executing at processor 725 or for writing to memory 724 or storage 723; or other suitable data. The data caches may speed up read or write operations by processor 602.

In particular embodiments, memory 724 includes main memory for storing instructions for processor 725 to execute or data for processor 725 to operate on. As an example and not by way of limitation, computer system 72 may load instructions from storage 723 or another source (such as, for example, another computer system 72) to memory 724. Processor 725may then load the instructions from memory 724 to an internal register or internal cache. To execute the instructions, processor 725 may retrieve the instructions from the internal register or internal cache and decode them. During or after execution of the instructions, processor 725 may write one or more results (which may be intermediate or final results) to the internal register or internal cache. Processor 725may then write one or more of those results to memory 724. In particular embodiments, processor 725executes only instructions in one or more internal registers or internal caches or in memory 604 (as opposed to storage 723 or elsewhere) and operates only on data in one or more internal registers or internal caches or in memory 604 (as opposed to storage 723 or elsewhere). One or more memory buses (which may each include an address bus and a data bus) may couple processor 725 to memory 724.

In particular embodiments, memory 724 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 604 may include one or more memories 724, where appropriate. Although this disclosure describes and illustrates particular memory, this disclosure contemplates any suitable memory.

In particular embodiments, storage 723 includes mass storage for data or instructions. As an example and not by way of limitation, storage 723 may include a hard disk drive (HDD), a floppy disk drive, flash memory, an optical disc, a magneto-optical disc, magnetic tape, or a Universal Serial Bus (USB) drive or a combination of two or more of these. Storage 723 may include removable or non-removable (or fixed) media, where appropriate. Storage 723 may be internal or external to computer system 600, where appropriate. In particular embodiments, storage 723 is nonvolatile, solid-state memory. In particular embodiments, storage 723 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 723 taking any suitable physical form. Storage 723 may include one or more storage control units facilitating communication between processor 725and storage 606, where appropriate. Where appropriate, storage 723 may include one or more storages 606. Although this disclosure describes and illustrates particular storage, this disclosure contemplates any suitable storage.

In particular embodiments, I/O interface 722 includes hardware, software, or both, providing one or more interfaces for communication between computer system 72 and one or more I/O devices. Computer system 72 may include one or more of these I/O devices, where appropriate. One or more of these I/O devices may enable communication between a person and computer system 72. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 608 for them. Where appropriate, I/O interface 722 may include one or more device or software drivers enabling processor 725 to drive one or more of these I/O devices. I/O interface 722 may include one or more I/O interfaces 722, where appropriate. Although this disclosure describes and illustrates a particular I/O interface, this disclosure contemplates any suitable I/O interface.

In particular embodiments, communication interface 721 includes hardware, software, or both providing one or more interfaces for communication (such as, for example, packet-based communication) between computer system 72 and one or more other computer systems 72 or one or more networks. As an example and not by way of limitation, communication interface 721 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 721 for it. As an example and not by way of limitation, computer system 600 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 600 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 72 may include any suitable communication interface 721 for any of these networks, where appropriate. Communication interface 721 may include one or more communication interfaces 721, where appropriate. Although this disclosure describes and illustrates a particular communication inter-face, this disclosure contemplates any suitable communication interface.

Herein, a computer-readable non-transitory storage medium 723 or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

Embodiments of the invention may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

## Claims

1. A method comprising by a computing system to provide personalized guided tours through a virtual guide in an augmented reality environment.

2. A system comprising by a mobile device and a computer system which provides personalized guided tours through a virtual guide in an augmented reality environment.

3. One or more computer readable storage media embodying software that is operable when executed and could provide personalized guided tours through a virtual guide in an augmented reality environment.
